Europäisches Patentamt

European Patent Office

Office européen des brevets

(11) Veröffentlichungsnummer : **0 055 351**
**B1**

(12) **EUROPÄISCHE PATENTSCHRIFT**

(45) Veröffentlichungstag der Patentschrift :
26.03.86

(21) Anmeldenummer : **81108722.0**

(22) Anmeldetag : **22.10.81**

(51) Int. Cl.⁴ : **G 05 D   3/00**

(54) Elektrohydraulischer Stellantrieb für Turbinenventile.

(30) Priorität : **29.12.80 DE 3049348**

(43) Veröffentlichungstag der Anmeldung :
**07.07.82 Patentblatt 82/27**

(45) Bekanntmachung des Hinweises auf die Patenterteilung : **26.03.86 Patentblatt 86/13**

(84) Benannte Vertragsstaaten :
**AT CH FR IT LI**

(56) Entgegenhaltungen :
**CH-A-   470 713**
**DE-A- 2 842 846**
**FR-A- 1 428 616**
**FR-A- 2 132 276**
**GB-A- 2 005 866**
**GB-A- 2 006 475**
**US-A- 3 581 103**
**US-A- 3 953 741**

(73) Patentinhaber : **KRAFTWERK UNION AKTIENGE-**
**SELLSCHAFT**
**Wiesenstrasse 35**
**D-4330 Mülheim (Ruhr) (DE)**

(72) Erfinder : **Kindermann, Wolfgang, Dipl.-Ing.**
**Strippchens Hof 32**
**D-4330 Mülheim (Ruhr) (DE)**

(74) Vertreter : **Mehl, Ernst, Dipl.-Ing. et al**
**Postfach 22 01 76**
**D-8000 München 22 (DE)**

Jouve, 18, rue St-Denis, 75001 Paris, France

## 0 055 351

**Beschreibung**

Die Erfindung bezieht sich auf einen elektrohydraulischen Stellantrieb für Turbinenventile gemäß Oberbegriff des Patentanspruchs 1.

Ein derartiger elektrohydraulischer Stellantrieb ist aus der DE-A-28 42 846 bekannt. Der hydraulische Stellzylinder mit Kraftkolben, das Regelglied und der als vorgesteuertes Servoventil ausgebildete elektrohydraulische Umformer sind hierbei zu einem geschlossenen Positions-Regelkreis verbunden, der die Aufgabe hat, dem elektrischen Sollwertsignal proportional die Stellung des Kraftkolbens zuzuordnen. Diese Zuordnung soll bei Sollwertsignaländerungen schnell, ohne Auswirkungen der Belastung des Kraftkolbens und mit hoher Positioniergenauigkeit wieder hergestellt werden. Bei gleichbleibender Empfindlichkeit des elektrohydraulischen Umformers ist die Positioniergenauigkeit jedoch von der Kreisverstärkung des Positionsregelkreises abhängig. Die kritische Kreisverstärkung k eines noch stabilen Positions-Regelkreises ist beispielsweise nach der Hurwitzbedingung

$$k < \frac{T_S + T_G}{T_S \cdot T_G} \cdot T_A,$$

wobei mit $T_S$ die Zeitkonstante des elektrohydraulischen Umformers, mit $T_G$ die Öffnungszeitkonstante der elektrischen Stellungsrückführung und mit $T_A$ die Integrationszeitkonstante des Stellantriebes bezeichnet ist.

Somit gilt :

$$k < konst. \cdot T_A$$

Eine Erhöhung der Kreisverstärkung führt also über eine Vergrößerung der Integrationszeitkonstanten des Stellantriebes zu längeren Stellzeiten des Stellantriebes. Damit schließt aber die Forderung nach hoher Positioniergenauigkeit die Forderung nach größerer Stellgeschwindigkeit aus. Ebenso führt die Forderung nach einer möglichst großen Belastungsunabhängigkeit beispielsweise zu größeren Kraftkolbendurchmessern und damit zu längeren Stellzeiten.

Der Erfindung liegt daher die Aufgabe zugrunde, einen elektrohydraulischen Stellantrieb für Turbinenventile zu schaffen, bei welchem die Forderungen nach hoher Positioniergenauigkeit, nach großer Stellgeschwindigkeit und nach großer Belastungsunabhängigkeit gleichzeitig erfüllt werden können.

Diese Aufgabe wird erfindungsgemäß durch die im kennzeichnenden Teil des Patentanspruchs 1 aufgeführten Merkmale gelöst.

Zwar ist eine kombinierte elektrohydraulische Fein- und Grobeinstellung bereits bekannt, und zwar durch die US-A-3 581 103. Dabei ist ein elektrohydraulischer Umformer vorgesehen, der für die Feinpositionierung eines Kraftkolbens in einem in beiden Richtungen der Regelabweichung begrenzten kleinen Signalbereich des Fehlersignals einen ersten Fluidstrom erzeugt. Für die rasche Grobpositionierung des Kraftkolbens dagegen ist eine binäre Durchflußschalter-Anordnung vorgesehen, die außerhalb des Kleinsignalbereiches einen zweiten größeren Fluidstrom freischaltet. Dabei handelt es sich jedoch um eine Positioniereinrichtung für eine Feinsäge, wobei anhand einer Befehlstasteranordnung die gewünschte Einstellung des Sägeblattes vorgegeben und nun zunächst der hydraulische Schnellgang zum Grobpositionieren eingeschaltet wird. Ist der Grobpositionierungsvorgang beendet, wird das Druckfluid der betreffenden Kraftkolbenseite über eine einstellbare Drossel mit wesentlich kleinerem Mentgenstrom zugeführt. Die langsame hydraulische Feinverstellung über das Drosselorgan erfolgt solange, bis die Sollposition erreicht und z. B. über Fotozellen rückgemeldet wird. Hierbei folgen Grob- und Fein-Positionierungsvorgang aufeinander, d. h. der Schaltschieber für den hydraulischen Schnellgang wird abgeschaltet, und dadurch muß das Druckfluid seinen Weg über die Drosselstelle nehmen.

Demgegenüber geht es beim elektrohydraulischen Stellantrieb für Turbinenventile nach der vorliegenden Erfindung darum, daß die hydraulische Feinpositionierung im Kleinsignalbereich der normale Betriebszustand ist, daß gleichzeitig mit diesem Betriebszustand und in Bereitschaftsstellung aber auch noch der binäre Durchflußschalter und als drittes Glied in der Staffel der binäre Dränierungsschalter parallel zum elektrohydraulischen Umformer geschaltet sind, so daß jederzeit, wenn durch eine überdurchschnittliche Belastung oder Entlastung das Turbinenventil möglichst rasch angepaßt werden soll, der binäre Durchflußschalter und ggf. der binäre Dränierungsschalter sofort eingreifen können.

Die mit der Erfindung erzielbaren Vorteile sind mithin vor allem in folgendem zu sehen :

1. Im Kleinsignalbereich ergibt sich aufgrund des elektrohydraulischen Umformers bei einer geringen Stellzeit eine größere mögliche kritische Kreisverstärkung, abgesehen von der im Stand der Technik bereits vorhandenen Verbesserung der Positioniergenauigkeit.

2. Nach Überschreiten des vom elektrohydraulischen Umformers beherrschten Kleinsignalbereiches wird durch die Regelabweichung zwischen dem Sollwertsignal und dem Istwertsignal der binäre Durchflußschalter in Funktion gesetzt, welcher praktisch schlagartig einen großen zusätzlichen Fluid-

**0 055 351**

strom für die rasche Verstellung des Kraftkolbens bereitstellt, wobei dieser binäre Durchflußschalter sowohl bei Vergrößerung als auch bei Verkleinerung der Last wirkt und wobei als dritte Stufe des Stellantriebes bei noch größeren Lastabsenkungen bzw. negativen Regelabweichungen der binäre Dränierungsschalter für eine rasche Ventilschließbewegung sorgt.

Weitere vorteilhafte Ausbildungen der Erfindung sind in den Unteransprüchen 2 bis 4 angegeben.

Im folgenden werden Ausführungsbeispiele der Erfindung anhand der Zeichnung näher erläutert. Dabei zeigt :

Figur 1 einen elektrohydraulischen Stellantrieb für das Regelventil einer Dampfturbine in stark vereinfachter schematischer Darstellung,

Figur 2 ein Blockschaltbild für den Stellungsregelkreis des in Fig. 1 dargestellten elektrohydraulischen Stellantriebes,

Figur 3 ein Diagramm mit der statischen Kennlinie des in Fig. 2 dargestellten Stellungsregelkreises,

Figur 4 den Schaltplan einer ersten Ausführungsform eines elektrohydraulischen Stellantriebes,

Figur 5 den Schaltplan einer zweiten Ausführungsform eines elektrohydraulischen Stellantriebes und

Figur 6 den Schaltplan einer dritten Ausführungsform eines elektrohydraulischen Stellantriebes, wobei einander entsprechende Teile in den einzelnen Figuren mit den gleichen Bezugszeichen versehen sind.

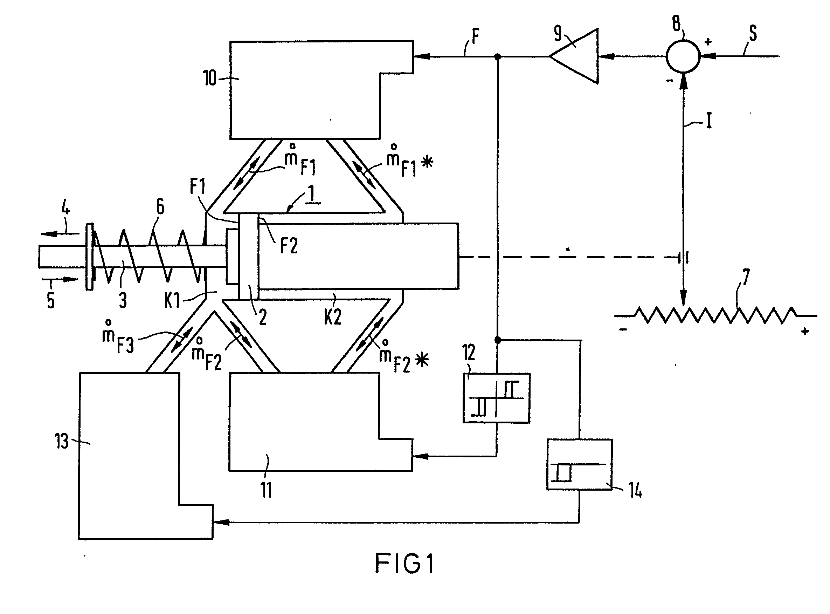

Der elektrohydraulischen Stellantrieb gemäß Fig. 1 besitzt einen hydraulischen Stellzylinder 1, dessen Kraftkolben 2 über eine Kolbenstange 3 den Öffnungsgrad eines in der Zeichnung nicht dargesstellten Regelventils einer Dampfturbine steuert. Die Schließrichtung dieses Regelventils ist hierbei durch einen Pfeil 4 angedeutet, während die Öffnungsrichtung durch einen Pfeil 5 angedeutet ist. Der Kraftkolben 2 wird durch eine auf der Kolbenstange 3 angeordnete Feder 6 in eine erste Endstellung gedrückt, wenn die der Kolbenstange 3 zugewandte Kolbenseite F1 nicht durch ein Druckfluid belastet ist. Diese erste Endstellung des Kraftkolbens 2 entspricht einer vollständigen Sperrung des Regelventils. Wird die Kolbenseite F1 durch ein Druckfluid beaufschlagt, so wird der Kraftkolben 2 in eine zweite Endstellung gedrückt, die der größtmöglichen Öffnung des Regelventils entspricht.

Zur Erzielung einer besseren Dämpfung bei der Positionierung des Kraftkolbens 2 ist dieser als doppeltwirkender Kolben ausgebildet, wobei die kleinere zweite Kolbenfläche F2 bei einer Bewegung in Schließrichtung 4 durch ein Druckfluid beaufschlagt wird und bei einer Bewegung in Öffnungsrichtung 5 druckentlastet wird.

Die Positionierung des Kraftkolbens 2 innerhalb des zwischen seinen beiden Endstellungen liegenden Stellbereichs wird in Abhängigkeit von einem Sollwertsignal S durch den hydraulischen Fluß von und zu den den Kolbenflächen F1 und F2 zugeordneten Kraftkolbenräumen K1 bzw. K2 gesteuert. Hierzu wird der Stellungs-Istwert des Kraftkolbens 2 auf elektrischem Wege mit Hilfe eines analogen Wegmeßumformers 7 gemessen und als elektrisches Istwertsignal I einem Regelglied 8 zugeführt. Dieses Regelglied 8 vergleicht das von der Stellung des Kraftkolbens 2 abgeleitete Istwertsignal I mit dem Sollwertsignal S und erzeugt entsprechend der Regelabweichung ein Differenzsignal, welches in einem Verstärker 9 verstärkt und einem elektrohydraulischen Umformer 10 als Fehlersignal F eingegeben wird. Der elektrohydraulische Umformer 8 formt das elektrische Fehlersignal F in einen analogen Fluidstrom $\dot{m}_{F1}$ um, welcher im Falle einer positiven Regelabweichung in den Kraftkolbenraum K1 geleitet wird und im Falle einer negativen Regelabweichung aus dem Kraftkolbenraum K1 geführt wird. Da der Kraftkolben 2 als doppeltwirkender Kolben ausgebildet ist, wird gleichzeitig ein entsprechender Fluidstrom $\dot{m}_{F1}^*$ aus dem Kraftkolbenraum K2 geführt bzw. in den Kraftkolbenraum K2 geleitet.

Der elektrohydraulische Umformer 10 ist ausschließlich für die Feinpositionierung des Kraftkolbens 2 bestimmt und baulich so ausgelegt, daß nur innerhalb eines in beiden Richtungen der Regelabweichung begrenzten Kleinsignalbereichs die Durchflußmengen dem elektrischen Fehlersignal F proportional sind.

Da der elektrohydraulische Umformer 10 nur im Kleinsignalbereich des Fehlersignals F arbeitet, ist zusätzlich ein binärer Durchflußschalter 11 vorgesehen, welcher von dem Fehlersignal F über einen ersten Grenzwertschalter 12 angesteuert ist. Der erste Grenzwertschalter 12 ist hierbei so eingestellt, daß kurz nach Überschreiten des Kleinsignalbereiches der binäre Durchflußschalter 11 angesteuert wird und einen zusätzlichen Fluidstrom $\dot{m}_{F2}$ für die rasche Grobpositionierung des Kraftkolbens 2 freischaltet. Dieser zusätzliche Fluidstrom $\dot{m}_{F2}$ wird im Falle einer positiven Regelabweichung entsprechender Größe in den Kraftkolbenraum K1 geleitet und im Falle einer negativen Regelabweichung entsprechender Größe aus dem Kraftkolbenraum K1 geführt. Gleichzeitig wird dabei ein entsprechender Fluidstrom $\dot{m}_{F2}^*$ aus dem Kraftkolbenraum K2 geführt bzw. in den Kraftkolbenraum K2 geleitet.

Der elektrohydraulische Stellantrieb besitzt außerdem auch noch einen binären Dränierungsschalter 13, welcher von dem Fehlersignal F über einen zweiten Grenzwertschalter 14 angesteuert werden kann. Der zweite Grenzwertschalter 14 ist hierbei so eingestellt, daß bei Überschreiten einer vorgebbaren negativen Regelabweichung der binäre Dränierungsschalter 13 angesteuert wird und einen weiteren Fluidstrom $\dot{m}_{F3}$ aus dem Kraftkolbenraum K1 freischaltet. Durch die rasche Dränierung des Kraftkolbenraumes K1 wird ein schnelles Schließen des Regelventils ermöglicht.

Wie bereits erwähnt wurde, ist der Kraftkolben 2 lediglich zur Erzielung einer besseren Dämpfung als doppeltwirkender Kolben ausgebildet. Der hydraulische Stellzylinder 1 könnte jedoch auch mit einem einfachwirkenden Kraftkolben ausgestattet werden. In diesem Fall würden dann der Kraftkolbenraum K2

3

und seine Verbindungen zu dem elektrohydraulischen Umformer 10 sowie dem binären Durchflußschalter 11 entfallen. Eine bessere Dämpfung kann aber auch dadurch erzielt werden, daß der Kraftkolbenraum K2 über eine Drossel mit einem Druckspeicher und einer Pumpe verbunden wird. In letzterem Fall würden die Verbindungen zwischen dem Kraftkolbenraum K2 und dem elektrohydraulischen Umformer 10 bzw. dem binären Durchflußschalter 11 ebenfalls entfallen.

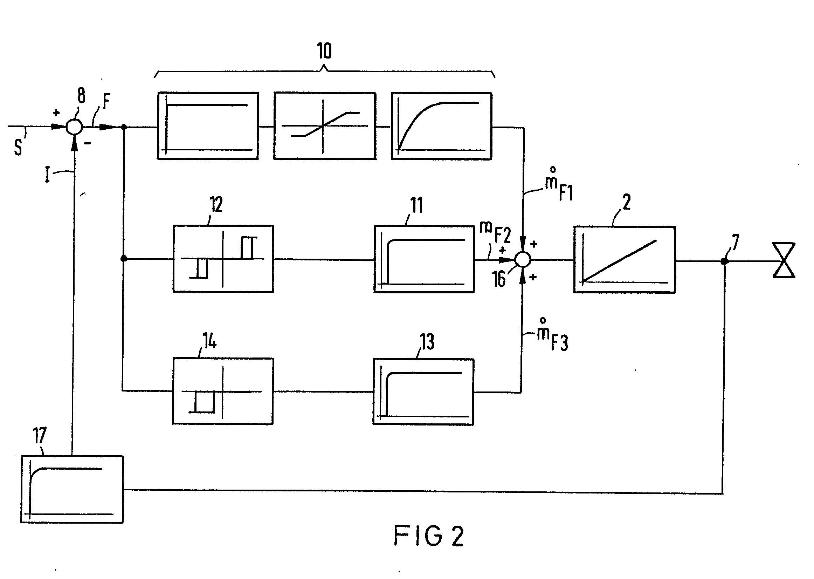

Fig. 2 zeigt ein Blockschaltbild für den Stellungsregelkreis des in Fig. 1 dargestellten elektrohydraulischen Stellantriebes. Das Regelglied 8 vergleicht das Sollwertsignal S mit dem Istwertsignal I und erzeugt bei einer etwaigen Differenz das der Regelabweichung entsprechende Fehlersignal F. Der weitere Signalfluß teilt sich dann abhängig von Größe und Vorzeichen der Regelabweichung in drei Zweige auf. Der erste Zweig umfaßt den elektrohydraulischen Umformer 10, welcher in einem Kleinsignalbereich das Fehlersignal F in den proportionalen Fluidstrom $\dot{m}_{F1}$ umformt. In dem ersten Zweig sind dabei in Richtung des Signalflusses die elektrohydraulische Umformung, das statische Verhalten und das dynamische Verhalten dargestellt. Der zweite Zweig umfaßt den ersten Grenzwertschalter 12 und den nachgeschalteten binären Durchflußschalter 11, welcher bei seiner Ansteuerung den zusätzlichen Fluidstrom $\dot{m}_{F2}$ bereitstellt. Der dritte Zweig umfaßt schließlich den zweiten Grenzwertschalter 14 und den nachgeschalteten binären Dränierungsschalter 13, welcher bei seiner Ansteuerung den weiteren Fluidstrom $\dot{m}_{F3}$ freischaltet. Die Fluidströme $\dot{m}_{F1}$, $\dot{m}_{F2}$, $\dot{m}_{F3}$ werden an der Stelle 16 zusammengeführt und verstellen den Kraftkolben 2 mit einer dem Summenfluidstrom proportionalen Geschwindigkeit. Zur Stellungsrückführung wird die Stellung des Kraftkolbens 2 durch den analogen Wegmeßumformer 8 erfaßt und in ein elektrisches Signal umgewandelt, welches nach einer Glättung 17 das Istwertsignal I bildet.

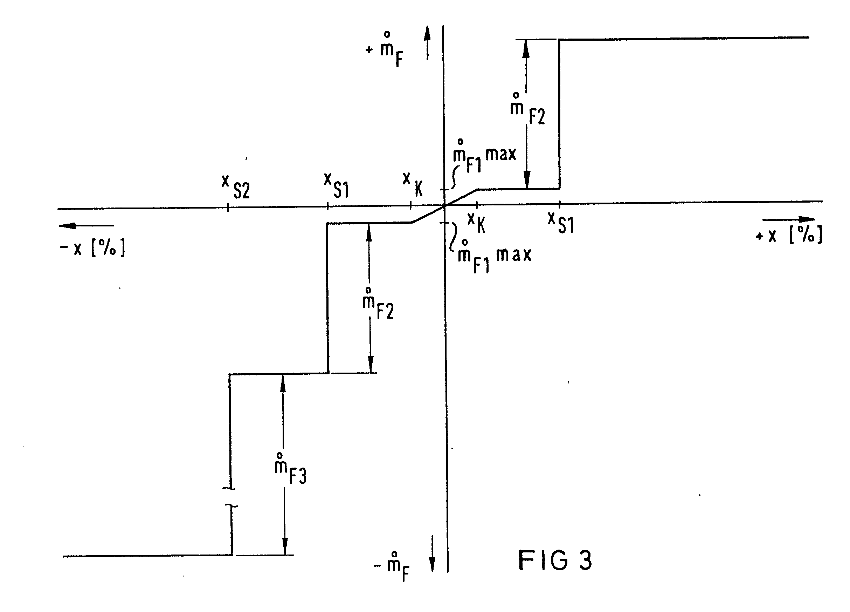

Zur weiteren Erläuterung des Stellungsregelkreises wird zusätzlich auf das Diagramm gemäß Fig. 3 verwiesen, welches den Verlauf der Fluidströme $\dot{m}_F$ in Abhängigkeit von der Regelabweichung x darstellt. Hierbei ist mit $+ m_F$ derjenige Fluidstrom bezeichnet, der bei einer positiven Regelabweichung x den Kraftkolben 2 in Öffnungsrichtung bewegt. Dementsprechend ist mit $- m_F$ derjenige Fluidstrom bezeichnet, der bei einer negativen Regelabweichung x den Kraftkolben 2 in Schließrichtung bewegt. Die Grenzwerte $\pm x_K$ entsprechen dem Kleinsignalbereich des Fehlersignals F. In diesem Bereich erzeugt der elektrohydraulische Umformer 10 einen der Regelabweichung x proportionalen Fluidstrom. Nachdem bei den Grenzwerten $\pm x_K$ die maximalen Öffnungsquerschnitte des elektrohydraulischen Umformers 10 freigegeben und die entsprechenden maximalen Fluidströme $\dot{m}_{F1}$ max erzielt sind, erfolgt bis zu den mit $\pm x_{S1}$ bezeichneten Grenzwerten keine weitere Änderung des Fluidstromes $\dot{m}_F$. Bei Überschreiten der Grenzwerte $\pm x_{S1}$ wird dann der binäre Durchflußschalter 11 über den ersten Grenzwertschalter 12 angesteuert und schaltet den zusätzlichen Fluidstrom $\dot{m}_{F2}$ frei. Wird in negativer Richtung auch noch den Grenzwert $- x_{S2}$ überschritten, so wird der binäre Dränierungsschalter 13 über den zweiten Grenzwertschalter 14 angesteuert und schaltet den weiteren Fluidstrom $\dot{m}_{F3}$ frei. Für die Grenzwerte des Kleinsignalbereichs $\pm x_K$, die Grenzwerte $\pm x_{S1}$ des ersten Grenzwertschalters 12 und für den negativen Grenzwert $- x_{S2}$ des zweiten Grenzwertschalters 14 haben sich die folgenden Grenzwert-Bereiche als vorteilhaft erwiesen :

$$0,02 \leqslant \frac{x_K}{x_{max}} \leqslant 0,10 \,,$$

$$0,06 \leqslant \frac{x_{S1}}{x_{max}} \leqslant 0,20,$$

$$- 0,80 \leqslant x_{S2} \leqslant - 0,20,$$

wobei $x_{max}$ die maximale Regelabweichung ist.
Besonders vorteilhaft sind die Grenzwert-Bereiche :

$$0,03 \leqslant \frac{x_K}{x_{max}} \leqslant 0,04,$$

$$0,10 \leqslant \frac{x_{S1}}{x_{max}} \leqslant 0,15,$$

$$\frac{x_{S2}}{x_{max}} \approx - 0,25,$$

Die für den Kennlinienverlauf maßgebenden Grenzwerte betragen beispielsweise

$$x_K = \pm\, 3{,}3\ \%$$
$$x_{S1} = \pm\, 13{,}2\ \%\ \text{und}$$
$$x_{S2} = -\, 25\ \%$$

von der maximalen Regelabweichung.

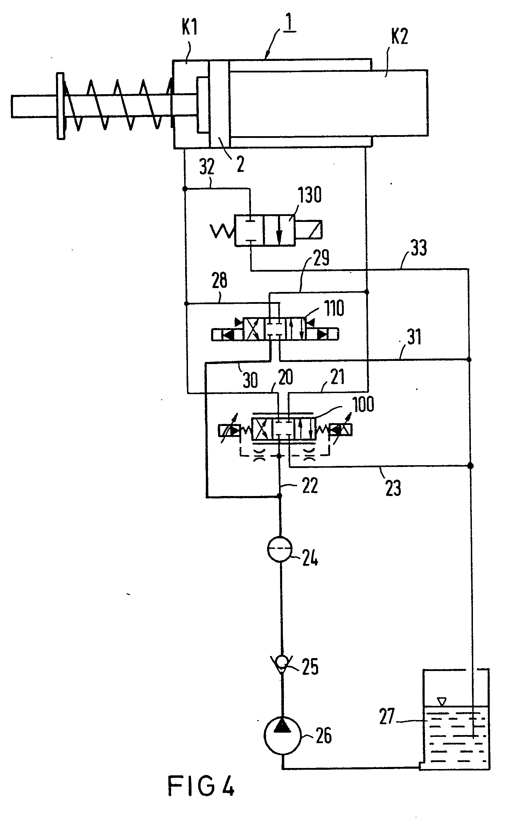

Fig. 4 zeigt den Schaltplan einer ersten Ausführungsform eines elektrohydraulischen Stellantriebes. Der für die Feinpositionierung des Kraftkolbens 2 vorgesehene elektrohydraulische Umformer 100 ist hier als vorgesteuertes Servoventil mit einem Vier-Wege-Steuerschieber und gesperrtem Durchfluß bei Mittelstellung ausgebildet. Der elektrohydraulische Umformer 100 besitzt zwei Steuerleitungen, wobei die erste Steuerleitung 20 mit dem Kraftkolbenraum K1 und die zweite Steuerleitung 21 mit dem Kraftkolbenraum K2 verbunden ist. Der elektrohydraulische Umformer 100 besitzt ferner einen Anschluß für eine Druckleitung 22 und einen Anschluß für eine Rücklaufleitung 23. Die Druckleitung 22 führt über ein Filter 24 und ein Rückschlagventil 25 zu einer Pumpe 26, welche saugseitig an einen Fluidbehälter 27 angeschlossen ist. Über die Rücklaufleitung 23 wird der bei einer Druckentlastung der Kraftkolbenräume K1 bzw. K2 abfließende Fluidstrom in den Fluidbehälter 27 zurückgeführt.

Der für die rasche Grobpositionierung des Kraftkolbens 2 vorgesehene binäre Durchflußschalter 110 ist als Vier-Wege-Schaltschieber mit drei Schaltstellungen ausgebildet. Die beiden Steuerleitungen 28 und 29 des binären Durchflußschalters 110 sind mit den Kraftkolbenräumen K1 bzw. K2 verbunden, während seine Druckleitung 30 zu der Pumpe 26 und seine Rücklaufleitung 31 zu dem Fluidbehälter 27 führt.

Der für ein schnelles Schließen des in der Zeichnung nicht näher dargestellten Turbinenventils vorgesehene binäre Dränierungsschalter 130 ist als Zwei-Wege-Schaltschieber ausgebildet, dessen Steuerleitung 32 mit dem Kraftkolbenraum K1 verbunden ist und dessen Rücklaufleitung 33 zu dem Fluidbehälter 27 führt.

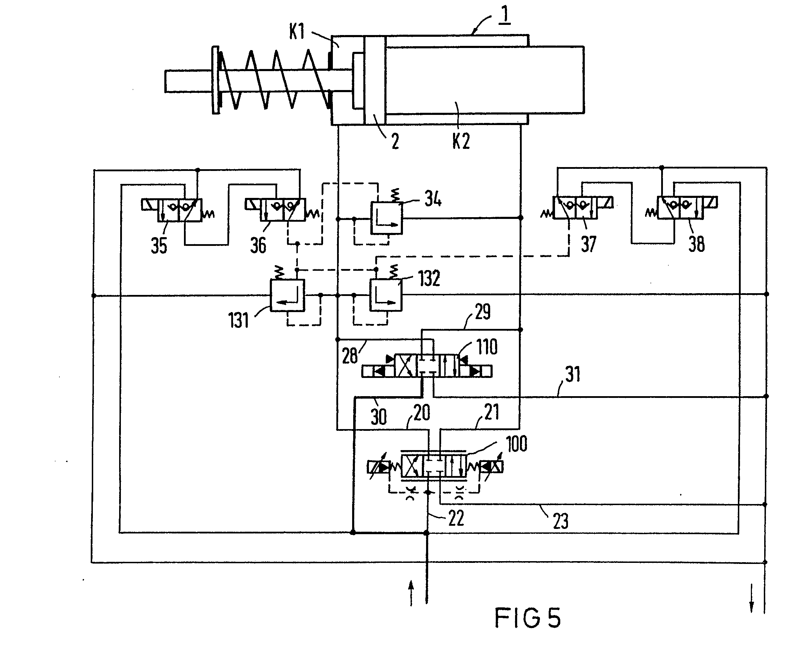

Die in Fig. 5 dargestellte zweite Ausführungsform eines elektrohydraulischen Stellantriebes unterscheidet sich von der in Fig. 4 dargestellten Ausführungsform dadurch, daß insgesamt zwei binäre Dränierungsschalter 131 und 132 vorgesehen sind, die beide als hydraulisch vorgesteuerte Sitzventile mit zwei Schaltstellungen ausgebildet sind. Derartige Sitzventile haben gegenüber Schaltschiebern den Vorteil, daß sie in Schließstellung besser abdichten und daß ihre Betätigung von dem durchfließenden Fluid nicht beeinflußt wird. Außerdem ist noch ein Umleitventil 34 vorgesehen, welches beim schnellen Schließen die Kraftkolbenräume K1 und K2 miteinander verbindet und somit eine rasche Füllung des Kraftkolbenraumes K2 ermöglicht. Die hydraulische Ansteuerung der binären Dränierungsschalter 131 und 132 und des Umleitventils 34 erfolgt über Vorsteuer-Magnetventile 35, 36, 37 und 38, welche aus Sicherheitsgründen in Ruhestromschaltung angeschlossen sind. Wird nur eines dieser Vorsteuer-Magnetventile 35 bis 38 abgesteuert, so werden beide binären Dränierungsschalter 131 und 132 und das Umleitventil 34 hydraulisch geschaltet. Dabei kann beispielsweise die Absteuerung der Vorsteuer-Magnetventile 35 und 38 durch separate Schnellschlußsignale und die Absteuerung der Vorsteuer-Magnetventile 36 und 37 durch die Überschreitung einer vorgegebenen negativen Regelabweichung ausgelöst werden.

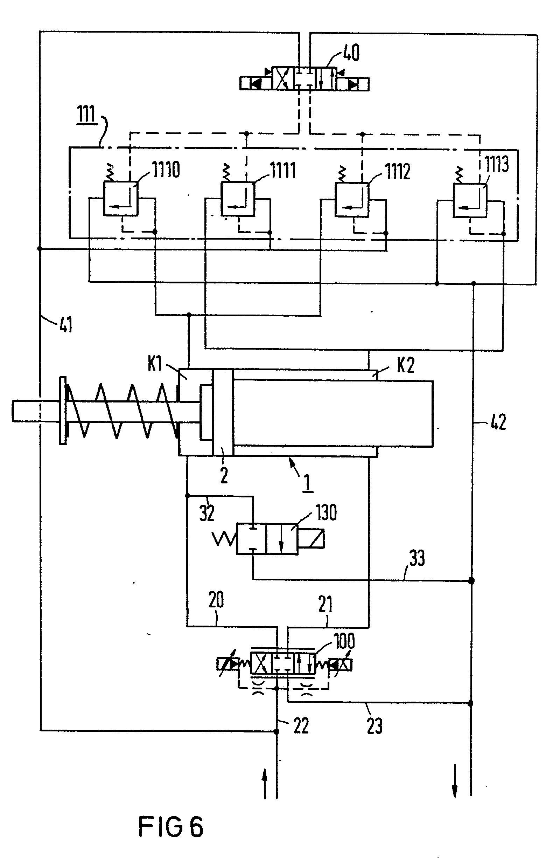

Die in Fig. 6 dargestellte dritte Ausführungsform eines elektrohydraulischen Stellantriebes unterscheidet sich von der in Fig. 4 dargestellten Ausführungsform dadurch, daß der insgesamt mit 111 bezeichnete binäre Durchflußschalter hydraulisch vorgesteuerte Zwei-Wege-Sitzventile 1 110, 1 111, 1 112 und 1 113 umfaßt, für deren hydraulische Ansteuerung ein Vier-Wege-Schaltschieber 40 mit drei Schaltstellungen vorgesehen ist. Der Vier-Wege-Schaltschieber 40 ist dabei so gesteuert, daß bei Überschreiten einer negativen Regelabweichung außerhalb des Kleinsignalbereiches das Zwei-Wege-Sitzventil 1 110 den Kraftkolbenraum K1 mit einer zum Fluidbehälter führenden Rücklaufleitung 42 und das Zwei-Wege-Sitzventil 111 den Kraftkolbenraum K2 mit einer zur Pumpe führenden Druckleitung 41 verbinden. Dementsprechend wird bei Überschreiten einer vorgegebenen positiven Regelabweichung außerhalb des Kleinsignalbereiches der Kraftkolbenraum K1 über das Zwei-Wege-Sitzventil 1 112 mit der zur Pumpe führenden Druckleitung 41 und der Kraftkolbenraum K2 über das Zwei-Wege-Sitzventil 1 113 mit der zum Fluidbehälter führenden Rücklaufleitung 42 verbunden.

**Patentansprüche**

1. Elektrohydraulischer Stellantrieb für Turbinenventile, insbesondere für Regelventile von Dampfturbinen, mit

a) einem hydraulischen Stellzylinder (1), dessen Kraftkolben (2) den Öffnungsgrad des Turbinenventils steuert und in Schließrichtung des Turbinenventils durch eine Feder (6) belastet ist,

b) einem Regelglied (8), das ein von der Stellung des Kraftkolbens (2) abgeleitetes Istwertsignal (I) mit einem Sollwertsignal (S) vergleicht und entsprechend der Regelabweichung (x) ein proportionales Fehlersignal (F) erzeugt und

c) einem elektrohydraulischen Umformer (10, 100), welcher das Fehlersignal (F) in einen proportionalen Fluidstrom ($\dot{m}_{F1}$) zur Positionierung des Kraftkolbens (2) umformt,

dadurch gekennzeichnet, daß

5

d) die Proportionalität des Fluidstroms ($\dot{m}_{F1}$) in einem Kleinsignalbereich mit den Grenzwerten $\pm x_K$ besteht ; daß

d1) mindestens ein zum elektrohydraulischen Umformer (10, 100) hydraulischen parallel geschalteter und an den beiden Kraftkolbenseiten hydraulisch angeschlossener binärer Durchflußschalter (11, 110) vorgesehen ist, welcher von dem Fehlersignal (F) über einen beim Erreichen eines ersten Grenzwerts ($\pm x_{S1}$) der Regelabweichung, wobei $|x_{S1}| > |x_K|$ ist, ansprechenden ersten Grenzwertschalter (12) angesteuert wird und einen zusätzlichen Fluidstrom ($\dot{m}_{F2}$) für die rasche Grobpositionierung des Kraftkolbens (2) freischaltet und daß

d2) für ein schnelles Schließen des Turbinenventils mindestens ein binärer Dränierungsschalter (13, 130, 131, 132) vorgesehen ist, welcher hydraulisch an derjenigen Kolbenseite angeschlossen ist, die bei Betätigung im Ventilöffnungssinne druckbelastet wird, welcher von dem Fehlersignal (F) über einen beim Erreichen eines zweiten negativen Grenzwerts ($x_{S2}$) der Regelabweichung wobei $-x_{S2} < -x_{S1}$ ist, ansprechenden zweiten Grenzwertschalter (14) angesteuert wird und einen weiteren zusätzlichen Fluidstrom ($\dot{m}_{F3}$) zur Entlastung des Kraftkolbens (2) freischaltet.

2. Elektrohydraulischer Stellantrieb nach Anspruch 1, dadurch gekennzeichnet, daß für die Grenzwerte ($\pm x_K$) des Kleinsignalbereichs als Bedingung

$$0.02 \leqslant \frac{|x_K|}{|x_{max}|} \leqslant 0.10,$$

vorzugsweise

$$0.03 \leqslant \frac{|x_K|}{|x_{max}|} \leqslant 0.04$$

gilt ; daß für die Grenzwerte ($\pm x_{S1}$) des ersten Grenzwertschalters (12) als Bedingung

$$0.06 \leqslant \frac{|x_{S1}|}{|x_{max}|} \leqslant 0.20,$$

vorzugsweise

$$0.10 \leqslant \frac{|x_{S1}|}{|x_{max}|} \leqslant 0.15$$

gilt und daß für den Grenzwert ($x_{S2}$) des zweiten Grenzwertschalters (14) als Bedingung

$$-0.80 \leqslant \frac{|x_{S2}|}{|x_{max}|} \leqslant -0.20,$$

vorzugsweise

$$\frac{|x_{S2}|}{|x_{max}|} \approx -0.25$$

gilt, wobei $|x_{max}|$ der Betrag der maximalen Regelabweichung ist.

3. Elektrohydraulischer Stellantrieb nach Anspruch 1 oder 2, wobei der Kraftkolben (2) des Stellzylinders (1) als doppeltwirkender Kolben ausgebildet ist, dadurch gekennzeichnet, daß die Zylinderräume (K1, K2) zu beiden Seiten des Kraftkolbens (2) durch mindestens ein Umleitventil (34) miteinander verbunden sind und daß das Umleitventil (34) über den zweiten Grenzwertschalter (14) angesteuert ist.

4. Elektrohydraulischer Stellantrieb nach einem der vorhergehenden Ansprüche, wobei zwei hydraulisch parallel geschaltete binäre Dränierungsschalter (131, 132) vorgesehen sind, welche als hydraulisch vorgesteuerte Zwei-Wege-Sitzventile mit jeweils zwei Schaltstellungen ausgebildet sind und wobei jedem binären Dränierungsschalter zwei separat ansteuerbare Vorsteuer-Magnetventile (35, 36 bzw. 37, 38) zugeordnet sind, dadurch gekennzeichnet, daß jeweils eines der beiden einem binären Dränierungsschalter (131, 132) zugeordneten Vorsteuer-Magnetventile (36, 37) von dem Fehlersignal (F) über den zweiten Grenzwertschalter (14) angesteuert ist und daß die beiden anderen Vorsteuer-Magnetventile (35, 38) mit separaten Schnellschlußsignalen beaufschlagbar sowie die Ansteuerleitungen der beiden Zwei-Wege-Sitzventile (131, 132) miteinander verbunden sind.

6

**Claims**

1. Electrohydraulic adjusting drive for turbine valves, in particular for regulating valves of steam turbines, with

a) a hydraulic adjusting cylinder (1), whose servo piston (2) controls the extent to which the turbine valve is opened and is loaded in the closing direction of the turbine valve by a spring (6),

b) a regulating member (8), which compares an actual value signal (I) derived from the position of the servo piston (2) with a desired value signal (S) and produces a proportional error signal (F) to correspond to the deviation (x), and

c) an electrohydraulic converter (10, 100) which converts the error signal (F) into a proportional fluid flow ($\dot{m}_{F1}$) to position the servo piston (2), characterised in that

d) the proportionality of the fluid flow ($\dot{m}_{F1}$) consists in a small signal area with the threshold values $\pm x_K$; in that

d1) there is at least one binary through-flow switch (11, 110) hydraulically connected in parallel with the electrohydraulic converter (10, 100) and hydraulically connected with both servo piston sides, which throughflow switch is triggered by the error signal (F) via a first threshold value switch (12) which responds to the deviation when a first threshould value ($\pm x_{S1}$) is reached, when $|x_{S1}| > |x_K|$, and releases a further flow of fluid ($\dot{m}_{F2}$) for the rapid rough positioning of the servo piston (21) ; and in that

d2) for rapid closing of the turbine valve there is at least one binary drainage switch (13, 130, 131, 132) which is hydraulically connected with that side of the piston which is subjected to pressure for operation for the purpose of opening the valve, which drainage switch is triggered by the error signal (F) via a second threshold value switch (14) which responds to the deviation when a second negative threshold valve ($x_{S2}$) is reached, when $-x_{S2} < -x_{S1}$, and releases a further flow of fluid ($\dot{m}_{F3}$) in order to relieve the servo piston (2).

2. Electrohydraulic adjusting drive according to claim 1, characterised in that for the threshold values ($\pm x_K$) of the small signal area

$$0.02 \leqslant \frac{|x_K|}{|x_{max}|} \leqslant 0.10,$$

preferably

$$0.03 \leqslant \frac{|x_K|}{|x_{max}|} \leqslant 0.04$$

is a condition ; in that for the threshold values ($\pm x_{S1}$) of the first threshold value switch (12)

$$0.06 \leqslant \frac{|x_{S1}|}{|x_{max}|} \leqslant 0.20,$$

preferably

$$0.10 \leqslant \frac{|x_{S1}|}{|x_{max}|} \leqslant 0.15$$

is a condition ; and in that for the threshold value ($x_{S2}$) of the second threshold value switch (14)

$$-0.80 \leqslant \frac{|x_{S2}|}{|x_{max}|} \leqslant -0.20,$$

preferably

$$\frac{|x_{S2}|}{|x_{max}|} \approx -0.25$$

is a condition, where $|x_{max}|$ is the amount of maximum deviation.

3. Electrohydraulic adjusting drive according to claim 1 or 2, the servo piston (2) of the adjusting cylinder (1) being designed as a double-acting piston, characterised in that the cylinder chambers (K1, K2)

7

on both sides of the servo piston (2) are interconnected by a least one by-pass valve (34) ; and in that the by-pass valve (34) is triggered via the second threshold value switch (14).

4. Electrohydraulic adjusting drive according to one of the preceding claims, two binary drainage switches (131, 132), hydraulically connected in parallel, being provided, which are designed as hydraulically precontrolled two-way seat valves with two switch positions respectively, and two separately triggerable precontrol magnetic valves (35, 36 and 37, 38 respectively) being associated with each binary drainage switch, characterised that in each case one of the two precontrol magnetic valves (36, 37) associated with a binary drainage switch (131, 132) is triggered by the error signal (F) via the second threshold value switch (14) ; and in that the other two precontrol magnetic valves (35, 38) can be acted upon by separate rapid shut-off signals and also the triggering lines of both two-way seat valves (131, 132) are interconnected.

### Revendications

1. Servomoteur électro-hydraulique pour des vannes de turbines, notamment pour des vannes de réglage de turbines à vapeur, comportant :

a) un vérin hydraulique (1), dont le piston (2) commande le degré d'ouverture de la vanne de la turbine et est chargé par un ressort (6) dans le sens de fermeture de la vanne de la turbine,

b) un circuit de réglage (8), qui compare un signal de valeur réelle (I) dérivé de la position du piston (2) à un signal de valeur de consigne (S) et produit un signal d'erreur proportionnel (F) en fonction de l'écart de réglage (x), et

c) un convertisseur électro-hydraulique (10, 100) qui transforme le signal d'erreur (F) en un écoulement fluidique proportionnel ($\dot{m}_{F1}$) servant à positionner le piston (2), caractérisé par le fait que :

d) la proportionnalité de l'écoulement fluidique ($\dot{m}_{F1}$) existe dans une gamme de petits signaux possédant les valeurs limites $\pm x_K$,

d1) il est prévu au moins un commutateur binaire de passage (11, 110), qui est branché hydrauliquement en parallèle avec le convertisseur électro-hydraulique (10, 100) et qui est raccordé de façon hydraulique aux deux faces du piston et qui est commandé par le signal d'erreur (F) par l'intermédiaire d'un premier commutateur à valeurs limites (12) qui répond, lorsqu'une première valeur limite ($\pm x_{S1}$) est atteinte, avec $|x_{S1}| > |x_K|$, et libère un écoulement fluidique supplémentaire ($\dot{m}_{F2}$) pour réaliser le positionnement approché rapide du piston (2), et

d2) il est prévu, pour une fermeture rapide de la vanne de la turbine, au moins un commutateur binaire de drainage (13 ; 130, 131, 132), qui est raccordé de façon hydraulique à la face du piston qui est chargé par la pression lors de l'actionnement dans le sens de l'ouverture de la vanne et qui est commandé par le signal d'erreur (F) par l'intermédiaire d'un second commutateur à valeur limite (14) qui répond lorsqu'une seconde valeur limite négative ($x_{S2}$) de l'écart de réglage est atteinte, avec $- x_{S2} < - x_{S1}$, et libère un autre écoulement fluidique supplémentaire ($\dot{m}_{F3}$) en vue de décharger le piston (2).

2. Servomoteur électro-hydraulique suivant la revendication 1, caractérisé par le fait que les valeurs limites ($\pm x_A$) de la plage des petits signaux, on a comme condition $|x_K|$

$$0,02 \leqslant \frac{|x_K|}{|x_{max}|} \leqslant 0,1$$

et de préférence

$$0,03 \leqslant \frac{|x_K|}{|x_{max}|} \leqslant 0,04 \,,$$

que pour les valeurs limites ($\pm x_{S1}$) du premier commutateur à valeurs limites (12) on a comme condition

$$0,06 \leqslant \frac{|x_{S1}|}{|x_{max}|} \leqslant 0,2$$

et de préférence

$$0,1 \leqslant \frac{|x_{S1}|}{|x_{max}|} \leqslant 0,15 \,,$$

et que pour la valeur limite $x_{S2}$ du second commutateur à valeur limite (14), on a comme condition

$$- 0,8 \leqslant \frac{|x_{S_2}|}{|x_{max}|} \leqslant - 0,2 \, ,$$

et de préférence

$$\frac{|x_{S_2}|}{|x_{max}|} \approx - 0,25,$$

$|x_{max}|$ représentant la valeur de l'écart de réglage maximum.

3. Servomoteur électro-hydraulique suivant la revendication 1 ou 2, dans lequel le piston (2) du vérin (1) est réalisé sous la forme d'un piston à double effets, caractérisé par les chambres (K1, K2) du vérin des deux côtés du piston (2) sont reliées entre elles par l'intermédiaire d'une vanne de renvoi (34) et que la vanne de renvoi (34) est commandée par l'intermédiaire du second commutateur à valeur limite (14).

4. Servomoteur électro-hydraulique suivant l'une des revendications précédentes, dans lequel il est prévu deux commutateurs binaires de drainage (131, 132) branchés en parallèle de façon hydraulique et qui sont réalisés sous la forme de soupage à siège bidirectionnelles à commande pilote hydraulique, comportant respectivement deux positions de commutation, et dans lequel deux électrovannes à commande pilote (35, 36 ou 37, 38), pouvant être commandées séparément, sont associées à chaque commutateur binaire de drainage, caractérisé par le fait que respectivement l'une des deux électrovannes à commande pilote (36, 37), associées à un commutateur binaire de drainage (131, 132), est commandée par le signal d'erreur (F) par l'intermédiaire du second commutateur à valeur limite (14) et que les deux autres électrovannes à commande pilote (35, 38) peuvent être chargées par des signaux séparés de fermeture rapide et que les conducteurs de commande des deux soupapes à siège bidirectionnelles (131, 132) sont reliées entre elles.

FIG 1

0 055 351

FIG 2

FIG 3

FIG 4

FIG 5

0 055 351

FIG 6